# EUROPÄISCHE PATENTSCHRIFT

(11) **EP 2 598 349 B1**
(45) Veröffentlichungstag und Bekanntmachung des Hinweises auf die Patenterteilung: **11.05.2016**
(21) Anmeldenummer: 11726711.2
(22) Anmeldetag: 17.06.2011
(51) Int. Cl.: B60G 17/02, B60G 11/18, B60G 11/20

(54) **ACHSSTELLER EINES KRAFTFAHRZEUGS**
AXLE CONTROL ELEMENT OF A MOTOR VEHICLE
DISPOSITIF DE RÉGLAGE D'ESSIEU D'UN VÉHICULE AUTOMOBILE

(30) Priorität: 31.07.2010 DE 102010033002
(43) Veröffentlichungstag der Anmeldung: 05.06.2013
(73) Patentinhaber: Audi AG, 85045 Ingolstadt (DE)
(72) Erfinder: MICHEL, Wilfried, 93339 Riedenburg (DE)
(86) Internationale Anmeldenummer: PCT/EP2011/002991
(87) Internationale Veröffentlichungsnummer: WO 2012/016610

(56) Entgegenhaltungen:
- EP-A1- 0 197 850
- EP-A1- 0 292 392
- EP-A1- 1 958 804
- EP-A2- 2 322 366
- WO-A1-2010/083875
- WO-A1-2010/083876
- DE-B- 1 118 622
- DE-B- 1 290 827
- DE-C- 916 260
- DE-U1- 8 703 322
- FR-A- 1 153 797
- FR-A- 1 349 711
- JP-A- 1 190 515
- JP-A- H02 117 409
- US-A- 2 607 610
- US-B1- 6 454 284

## Beschreibung

Die Erfindung betrifft einen Achssteller eines Kraftfahrzeugs nach dem Oberbegriff des Anspruchs 1.

Aus der WO 2010/083876 A1 ist ein gattungsgemäßer Achssteller bekannt, der ein Drehfedersystem als Speicherfeder aufweist, das einerseits über eine Drehschwinge mit dem Radführungselement verbunden ist und andererseits über einen steuerbaren Stellantrieb fahrzeugaufbaufest abgestützt ist.

Aus der JP 1 190515 A ist ein Achssteller eines Kraftfahrzeugs bekannt, der ein Drehfedersystem als Speicherfeder aufweist, das einerseits über eine Drehschwinge mit einem Radführungselement verbunden ist und andererseits über eine Stellvorrichtung fahrzeugaufbaufest abgestützt ist. Das Drehfedersystem weist ineinander geschachtelt ein Drehfederrohr und einen Drehfederstab auf. Die Stellvorrichtung besteht aus einer zum Drehfedersystem beabstandeten und fahrzeugaufbaufesten Stange und einem damit verbundenen, schwenksteuerbaren Antriebshebel. Der Antriebshebel ist mit einem Drehfederrohr verbunden. Der Antriebshebel ist mit dem Drehfederstab direkt mit dem Radführungselement verbunden. Aus der EP 0 197 850 A1 und aus der US 6 454 284 B1 ist jeweils ein weiterer Achssteller eines Kraftfahrzeuges bekannt, der eine Stellvorrichtung aufweist, die ein steuerbarer Stellantrieb ist, der aus einer zum Drehfedersystem beabstandeten und fahrzeugaufbaufesten Stellmotoreinheit besteht.

Aus DE 100 01 087 A1 ist zudem ein elektromechanischer Stabilisator für das Fahrwerk eines Fahrzeugs bekannt, mit einem zwischen zwei Stabilisatorhälften eingebundenen und diese bedarfsweise gegeneinander um einen Verdrehwinkel verdrehenden Aktuator, der aus einem Elektromotor sowie einem diesem nachgeschalteten Getriebe besteht. Es handelt sich somit hier um einen üblichen U-förmigen Stabilisator, der mittig geteilt ist und dessen Stabillsatorhälften gesteuert gegeneinander, insbesondere zur Verbesserung der Wankeigenschaften, verdrehbar sind. Der Abtriebswellenzapfen des Getriebes ist hier drehfest mit einer Stabilisatorhälfte verbunden.

Weiter ist aus EP 1 609 634 A1 eine ähnliche Anordnung bekannt, bei der ebenfalls zwei Stabilisatorhälften mit Stellantrieben sowohl gegeneinander als auch gegenüber dem Fahrzeugaufbau für eine Niveauregulierung verstellbar sind. In unterschiedlichen Ausführungen ist hier jeweils ein Stellantrieb am Ende eines langen Stabilisatorschenkels angeschlossen, so dass dadurch ein relativ großer und in seiner Lage nur wenig variierbarer Einbauraum erforderlich ist.

Aufgabe der Erfindung ist es, einen gattungsgemäßen Achssteller so weiter zu bilden, dass bei guter Funktion variierbare Einbaumöglichkeiten bei relativ geringem Platzbedarf zur Verfügung gestellt werden.

Diese Aufgabe wird gelöst mit den Merkmalen des Anspruchs 1. Vorteilhafte Ausgestaltungen sind Gegenstand der abhängigen Ansprüche.

Erfindungsgemäß ist vorgesehen, dass das Drehfedersystem ineinander geschachtelt wenigstens ein Drehfederrohr und wenigstens einen Drehfederstab aufweist, wodurch der erforderliche Längseinbauraum für das Drehfedersystem erheblich reduziert ist.

Es wäre nunmehr grundsätzlich denkbar, um ein so ineinander geschachteltes Drehfedersystem eine Stellmotoreinheit als Motor-Getriebe-Einheit konzentrisch anzuordnen. Dadurch würde jedoch viel radialer Bauraum beansprucht, der oft nicht vorhanden ist, so dass auf Grund eines Platzmangels eine Anordnung und Unterbringung innerhalb eines Achssystems nicht möglich wäre.

Erfindungsgemäß besteht daher der Stellantrieb aus einer zum Drehfedersystem beabstandeten und fahrzeugaufbaufesten Stellmotoreinheit sowie einem damit verbundenen schwenksteuerbaren Antriebshebel. Das Drehfedersystem und der erforderliche Stellantrieb sind somit hier räumlich entzerrt, so dass eine flexible Anordnung entsprechend den Platzgegebenheiten insbesondere durch Variationen der Antriebshebellänge und der Winkellage zwischen Drehfedersystem und Stellmotoreinheit möglich ist.

Der Antriebshebel ist mit einem Drehfederrohr und ein Abtriebshebel mit einem Drehfederstab sowie direkt oder indirekt über eine Koppel mit dem Radführungselement verbunden sein.

Insgesamt stehen bei der erfinderischen Anordnung somit vorteilhaft gestalterische Freiräume für die Anordnung von Achsstellern im meist ohnehin dicht gepackten Fahrwerksbereich eines Kraftfahrzeugs zur Verfügung.

Konkret weist das ineinander geschachtelte Drehfedersystem einen Drehfederstab aus Vollmaterial auf, der etwa horizontal in Fahrzeugquerrichtung verläuft und der teilweise in einem Drehfederrohr verdrehbar aufgenommen ist, wobei der Drehfederstab an einer Endseite mit dem zugeordneten Drehfederrohrende verdrehfest verbunden ist.

Zudem ragt der Drehfederstab gegenüberliegend zur Verbindungsstelle mit einem Drehfederstab-Überstand aus dem Drehfederrohr. Mit diesem Drehfederrohrende ist der Antriebshebel verbunden und der Abtriebshebel ist am Drehfederstab-Überstand angeschlossen. Alternativ kann je nach den Gegebenheiten bei prinzipiell gleicher Funktion der Antriebshebel mit dem Drehfederstab-Überstand verbunden sein, wobei dann der Abtriebshebel am dortigen Drehfederrohrende angeschlossen ist.

Erfindungsgemäß ist das Drehfederrohr in einer fest mit einem Hilfsrahmen verbundenen Lagervorrichtung verdrehbar und ebenso die Stellmotoreinheit am Hilfsrahmen gehalten.

Zweckmäßig liegen der Antriebshebel und der Abtriebshebel sowie gegebenenfalls eine Koppel in einer etwa senkrecht zur Achse des Drehfedersystems ausgerichteten Schwenkebene. Je nach den Einbaugegebenheiten kann jedoch auch von einer senkrechten Anordnung etwas abgewichen werden, so dass sich auch dadurch Einbaufreiräume ergeben.

Als Stellmotoreinheit kann vorteilhaft ein Linearantrieb verwendet werden, wobei die Anforderungen an die Stellmotoreinheit für den Achssteller besonders gut durch einen elektromotorisch angetriebenen Kugelgewindetrieb mit Wegmesssystem und Haltebremse erfüllt werden. Für eine zweckmäßige Anordnung bei guter Kraftübertragung sollen in der Ausgangslage der wirksame Hebel des Antriebhebels und die Achse des Linearantriebs vorzugsweise einen Winkel von etwa 90° einnehmen.

Eine konstruktiv geeignete Lösung für die jeweils endseitige, drehübertragende Verbindung zwischen dem Drehfederstab und dem Drehfederrohr besteht in einer Steckverbindung mit Verzahnung.

Wenn der Achssteller als Hinterachssteller verwendet wird, ist es zweckmäßig, wenn der mit der Stellmotoreinheit verbundene Antriebshebel am Drehfederstab-Überstand angeschlossen ist und entsprechend am benachbarten Drehfederrohrende ein über eine Koppel mit dem Radführelement verbundener Abtriebshebel angeschlossen ist.

Wenn der Achssteller als Vorderachssteller verwendet wird, ist dagegen vorteilhaft eine Ausführung mit einem kombinierten Stabilisator möglich. Dabei ist der Drehfederstab im Drehfederrohr ein Schenkelteil eines L-förmigen Stabilisators, der im Bereich des Drehfederstab-Überstands zu seinem zweiten Stabilisator-Schenkelteil als Abtriebshebel abgebogen und endseitig über eine Koppel mit dem Radführungselement verbunden ist. Der mit der Stellmotoreinheit verbundene Antriebshebel ist hier am zugeordneten Drehfederrohrende angeschlossen.

Im Gesamtsystem der Fahrwerksfederung soll der Achssteller eine teiltragende aktiv gesteuerte Komponente sein, wobei sich der Fahrzeugaufbau sowohl über eine Tragefeder und die parallel angeordnete Speicherfeder des Achsstellers auf das zugeordnete Rad abstützt. Mit dem Achssteller können je nach Gegebenheiten Radführungselemente wie Achslenker, insbesondere Trapezlenker, Dreieckslenker oder Einzellenker zusammen wirken.

Anhand einer Zeichnung wird die Erfindung weiter erläutert.

Es zeigen:
- Fig. 1: eine Seitenansicht eines Achsstellers als Hinterachssteller;
- Fig. 2: eine Draufsicht auf den Hinterachssteller nach Fig. 1 gemäß einem nicht von der Erfindung umfassten Vergleichsbeispiel;
- Fig. 3: eine (teilweise) Seitenansicht eines Achsstellers als Vorderachssteller; und
- Fig. 4: eine Draufsicht auf den Vorderachssteller nach Fig. 3.

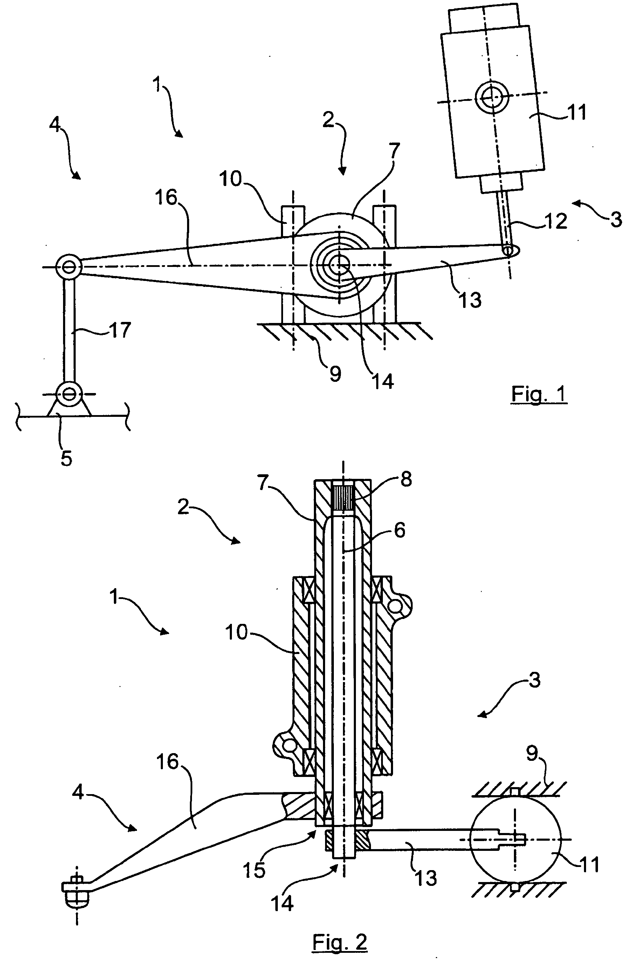

In den Fig. 1 und 2 ist in einer Seitenansicht und in einer Draufsicht ein Hinterachssteller 1 gezeigt mit einem Drehfedersystem 2, einem Stellantrieb 3 und mit einer Abtriebsvorrichtung 4 zu einem Radführungselement 5.

Das Drehfedersystem 2 besteht aus einem inneren Drehfederstab 6, der in einem Drehfederrohr 7 aufgenommen ist. Der Drehfederstab 6 und das Drehfederrohr 7 sind an einer einander zugeordneten Endseite durch eine Steckverbindung 8 mit Verzahnung drehübertragend verbunden. Das Drehfedersystem 2 ist mit seinem Drehfederrohr 7 in einer mit einem Hilfsrahmen 9 verbundenen Lagervorrichtung 10 verdrehbar gehalten. Ebenso ist eine Stellmotoreinheit 11 des Stellantriebs 3 am Hilfsrahmen 9 gelagert.

Die Stellmotoreinheit 11 ist als Linearantrieb in der Art eines elektromotorisch angetriebenen Kugelgewindetriebs ausgeführt, wobei am Linearstellelement 12 ein Antriebshebel 13 angelenkt ist. In der in Fig. 1 gezeigten Ausgangslage nehmen das Linearstellelement 12 und der Antriebshebel 13 etwa einen Winkel von 90° ein.

Gegenüberliegend zur Steckverbindung 8 ragt der Drehfederstab 6 mit einem Drehfederstab-Überstand 14 aus dem Drehfederrohr 7 hervor, wobei an diesem Drehfederstab-Überstand 14 der Antriebshebel 13 verdrehfest angeschlossen ist. Am benachbarten Drehfederrohrende 15 ist ein Abtriebshebel 16 der Abtriebsvorrichtung 4 verdrehfest angeschlossen, der am anderen Ende mit einer Koppel 17 verbunden ist, die wiederum mit dem Radführungselement 5, beispielsweise einem Trapezlenker, Verbindung hat.

Im geschachtelten Drehfedersystem 2 des Hinterachsstellers 1 kann somit im Wechselspiel der Ein- und Ausfederbewegung eines Rades Federarbeit aufgenommen bzw. abgegeben werden. Zudem ist es möglich mit der Stellmotoreinheit 11 und dem Antriebshebel 13 Momente zu überlagern und das Drehfedersystem 2 je nach den Erfordernissen aufzuziehen oder zu entspannen. Durch das Vorhandensein einer (nicht dargestellten) Hauptfeder müssen mit dem Hinterachssteller nur anteilig Stellkräfte zur Radlaständerung gestellt werden und es findet ständig eine Überlagerung der Federkräfte aus der Hauptfeder und dem Drehfedersystem 2 statt, je nach dem, ob die Fahrsituation dies erfordert und die Steuerung dies vorgibt.

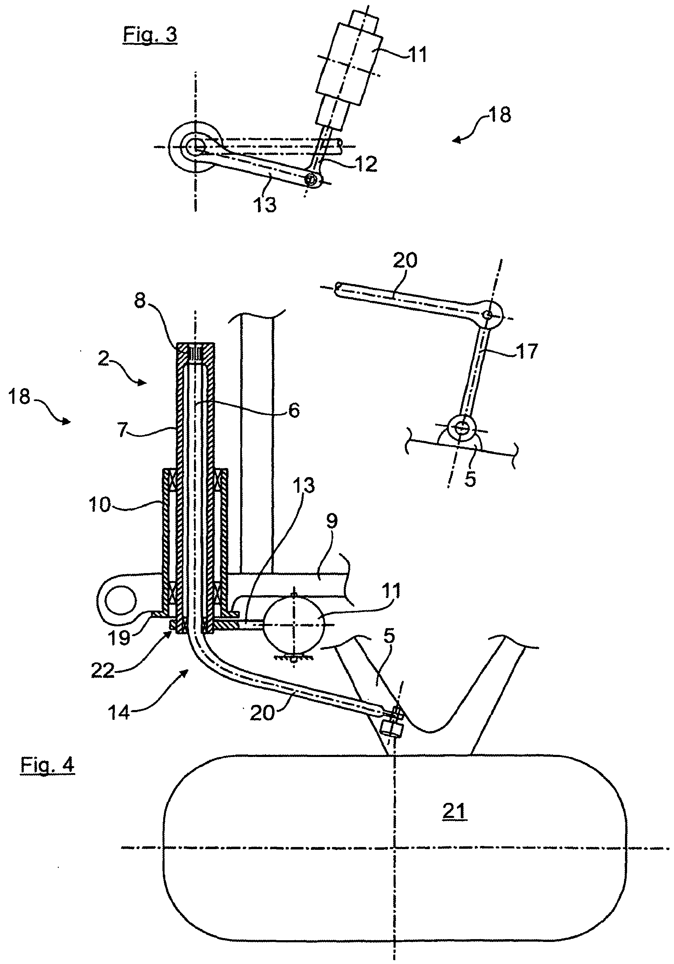

In den Fig. 3 und 4 ist in einer Seitenansicht bzw. in einer Draufsicht ein Vorderachssteller 18 dargestellt mit etwa gleicher Funktion wie der in den Fig. 1 und 2 gezeigte Hinterachssteller, so dass für gleichwirkende Teile gleiche Bezugszeichen verwendet sind.

Auch beim Vorderachssteller 18 ist ein Drehfedersystem 2 vorgesehen, bei dem in einem Drehfederrohr 7 ein Drehfederstab 6 aufgenommen ist, welche endseitig mit einer Steckverbindung 8 verdrehfest verbunden sind. Das Drehfederrohr 7 des Drehfedersystems 2 ist auch hier in einer als Lagerbuchse ausgeführten Lagervorrichtung 10 verdrehbar gehalten, welche Lagervorrichtung 10 über einen Flansch 19 mit dem Hilfsrahmen 9 verbunden ist.

Weiter ist auch beim Vorderachssteller 18 eine Stellmotoreinheit 11 in der Art eines Kugelgewindetriebs am Hilfsrahmen 9 gelagert und mit dem Linearstellelement 12 über einen Antriebshebel 13 verbunden.

Im Gegensatz zum Hinterachssteller 1 ist jedoch hier der Drehfederstab 6 im Drehfederrohr 7 ein Schenkelteil eines L-förmigen Stabilisators, welcher im Bereich des Drehfederstabüberstands 14 zu seinem zweiten Stabilisatorschenkelteil 20 entsprechend einem Abtriebshebel abgebogen ist. Endseitig ist dieser Schenkelteil 20 über eine Koppel 17 wiederum mit einem Radführungselement 5 verbunden, welches an einem Rad 21 angelenkt ist. Durch die Verwendung des Stabilisatorschenkelteils 20 als Abtriebshebel ist beim Vorderachssteller 18 im Gegensatz zum Hinterachssteller 1 der Antriebshebel 13 mit dem der Steckverbindung 8 gegenüberliegenden Drehfederrohrende 22 verdrehfest verbunden.

Die Funktion des Vorderachsstellers 18 entspricht damit im Prinzip der in Verbindung mit dem Hinterachssteller 1 erläuterten Funktion.

### Bezugszeichenliste

- 1: Hinterachssteller
- 2: Drehfedersystem
- 3: Stellantrieb
- 4: Abtriebsvorrichtung
- 5: Radführungselement
- 6: Drehfederstab
- 7: Drehfederrohr
- 8: Steckverbindung
- 9: Hilfsrahmen
- 10: Lagervorrichtung
- 11: Stellmotoreinheit
- 12: Linearstellelement
- 13: Antriebshebel
- 14: Drehfederstab-Überstand
- 15: Drehfederrohrende
- 16: Abtriebshebel
- 17: Koppel
- 18: Vorderachssteller
- 19: Flansch
- 20: 2. Stabilisator-Schenkelteil
- 21: Rad
- 22: Drehfederrohrende

## Patentansprüche

1. Achssteller eines Kraftfahrzeugs mit einem Drehfedersystem (2) als Speicherfeder, das einerseits über eine Drehschwinge mit einem Radführungselement (5) verbunden ist und andererseits über einen steuerbaren Stellantrieb (3) fahrzeugaufbaufest abgestützt ist, wobei das Drehfedersystem (2) ineinander geschachtelt wenigstens ein Drehfederrohr (7) und wenigstens einen Drehfederstab (6) aufweist, **dadurch gekennzeichnet, dass** der Stellantrieb (3) aus einer zum Drehfedersystem (2) beabstandeten und fahrzeugaufbaufesten Stellmotoreinheit (11) und einem damit verbundenen, schwenksteuerbaren Antriebshebel (13) besteht, und dass der Antriebshebel (13) mit dem Drehfederrohr (7) und ein Abtriebshebel (20) mit einem Drehfederstab (6) sowie direkt oder indirekt über eine Koppel (17) mit dem Radführungselement (5) verbunden ist, und dass das Drehfederrohr (7) des Drehfedersystems (2) in einer fest mit einem Hilfsrahmen (9) verbundenen Lagervorrichtung (10) verdrehbar und ebenso die Stellmotoreinheit (11) am Hilfsrahmen (9) gehalten ist.

2. Achssteller nach Anspruch 1, **dadurch gekennzeichnet, dass** das ineinander verschachtelte Drehfedersystem (2) einen Drehfederstab (6) aus Vollmaterial enthält, der etwa horizontal in Fahrzeugquerrichtung verläuft und der teilweise in einem Drehfederohr (7) verdrehbar aufgenommen ist, wobei der Drehfederstab (6) an einer Endseite mit dem zugeordneten Drehfederrohrende mittels einer Verbindung (8) verdrehfest verbunden ist, insbesondere mittels einer Steckverbindung (8) verdrehfest verbunden ist, und dass der Drehfederstab (6) gegenüberliegend zur verdrehfesten Verbindung (8) mit einem Drehfederstab-Überstand (14) aus dem Drehfederrohr (7) ragt und dort der Antriebshebel (13) mit diesem Drehfederrohrende (22) verbunden ist, wobei am Drehfederstab-Überstand (14) der Abtriebshebel (20) angeschlossen ist.

3. Achssteller nach einem der Ansprüche 1 oder 2, **dadurch gekennzeichnet, dass** der Antriebshebel (13) und der Abtriebshebel (16, 20) sowie gegebenenfalls eine Koppel (17) in einer etwa senkrecht zur Achse des Drehfedersystems (2) liegenden Schwenkebene schwenkbar angeordnet sind.

4. Achssteller nach einem der Ansprüche 1 bis 3, **dadurch gekennzeichnet, dass** die Stellmotoreinheit (11) einen Linearantrieb, insbesondere einen elektromotorisch angetriebenen Kugelgewindetrieb mit Wegmesssystem und Haltebremse aufweist, wobei in der Ausgangslage der wirksame Hebel des Antriebshebels (13) und die Achse bzw. das Linearstellelement (12) des Linearantriebs (11) vorzugsweise einen Winkel von etwa 90° einnehmen.

5. Achssteller nach einem der Ansprüche 1 bis 4, **dadurch gekennzeichnet, dass** die jeweils endseitige, drehübertragende Verbindung zwischen dem Drehfederstab (6) und dem Drehfederrohr (7) durch eine Steckverbindung (8) mit Verzahnung ausgeführt ist.

6. Achssteller nach einem der Ansprüche 1 bis 5, **dadurch gekennzeichnet, dass** der Achssteller ein Vorderachssteller (18) ist, bei dem der Drehfederstab (6) ein Schenkelteil eines L-förmigen Stabilisators ist, der im Bereich des Drehfederstab-Überstands (14) zu seinem zweiten Stabilisator-Schenkelteil (20) als Abtriebshebel abgebogen und endseitig über eine Koppel (17) mit dem Radführungselement (5) verbunden ist, und dass am zugeordneten Drehfederrohrende (22) ein mit der Stellmotor-einheit (11) verbundener Antriebshebel (13) angeschlossen ist.

7. Achssteller nach einem der Ansprüche 1 bis 6, **dadurch gekennzeichnet, dass** das Drehfedersystem (2) als Speicherfeder des Achsstellers (1; 18) jeweils parallel zu einer Tragfeder angeordnet ist.

8. Achssteller nach einem der Ansprüche 1 bis 7, **dadurch gekennzeichnet, dass** das Radführungselement (5) ein Achslenker, insbesondere ein Trapezlenker, ein Dreieckslenker oder Einzellenker ist.

## Claims

1. Axle control element of a motor vehicle comprising a torsion spring system (2) designed as a preloaded spring, which is connected on the one hand via a rotating arm to a wheel control element (5) and on the other hand is supported on a vehicle body by a controllable actuator (3), wherein the torsion spring system (2) comprises at least one torsion spring tube (7) and at least one torsion spring rod (6) nested inside one another, **characterised in that** the actuator (3) comprises an actuator unit (11), which is spaced from the torsion spring system (2) and mounted fixed onto the vehicle body and a drive lever (13) which is connected to the actuator unit for controlled pivoting, and **in that** the drive lever (13) is connected to the torsion spring tube (7) and an output lever (20) is connected to a torsion spring rod (6) and is also connected directly or indirectly via a coupling (17) to the wheel control element (5), and **in that** the torsion spring tube (7) of the torsion spring system (2) is held rotatably in a bearing device (10) connected securely to a subframe (9) and also the actuator unit (11) is held on the subframe (9).

2. Axle control element according to claim 1, **characterised in that** the inter-nested torsion spring system (2) contains a torsion spring rod (6) made of a solid material which runs approximately horizontally in the transverse direction of the vehicle and which is mounted rotatably partly in a torsion spring tube (7), wherein the torsion spring rod (6) is secured rotationally securely on an end side to the assigned torsion spring tube end by means of a connection (8), in particular is connected rotationally securely by means of a plug connection (8), and **in that** the torsion spring rod (6) protrudes opposite from the rotationally secure connection (8) from the torsion spring tube (7) so as to form a torsion spring rod protrusion (14) and there the drive lever (13) is connected to said torsion spring tube end (22), wherein the output lever (20) is connected to the torsion spring rod protrusion (14).

3. Axle control element according to any one of claims 1 or 2, **characterised in that** the drive lever (13) and the output lever (16, 20) and if necessary a coupling (17) are pivotally arranged in a pivot plane oriented approximately perpendicular to an axis of the torsion spring system (2).

4. Axle control element according to any one of claims 1 to 3, **characterised in that** the actuator unit (11) comprises a linear drive, in particular an electric motor-driven ball screw drive with position sensor and holding brake, wherein in the starting position the acting lever of the drive lever (13) and the axis or linear actuator (12) of the linear drive (11) preferably enclose an angle of approximately 90°.

5. Axle control element according to any one of claims 1 to 4, **characterised in that** the respective end, rotary-transmitting connection between the torsion spring rod (6) and the torsion spring tube (7) is formed by a plug connection (8) with toothing.

6. Axle control element according to any one of claims 1 to 5, **characterised in that** the axle control element is a front axle control element (18), wherein the torsion spring rod (6) is a leg portion of an L-shaped stabiliser, which is bent as the output lever in the region of the torsion spring rod protrusion (14) relative to its second stabiliser leg portion (20) and at the end is connected via a coupling (17) to the wheel control element (5), and **in that** a drive lever (13) connected to the actuator unit (11) is connected at a corresponding end of the torsion spring tube (22).

7. Axle control element according to any one of claims 1 to 6, **characterised in that** the torsion spring system (2) as a preloaded spring of the axle control element (1; 18) is arranged respectively parallel to a bearing spring.

8. Axle control element according to any one of claims 1 to 7, **characterised in that** the wheel control element (5) comprises an axle guide, in particular a trapezoidal axle guide, a wishbone axle guide or a single axle guide.

## Revendications

1. Dispositif de réglage d'essieu s'un véhicule automobile comportant un système à ressort de torsion (2) comme ressort accumulateur, qui est relié d'une part via une coulisse rotative à un élément de guidage de roue (5) et s'appuie d'autre part de manière fixe sur la carrosserie du véhicule via un mécanisme de commande réglable (3), dans lequel le système à ressort de torsion (2) présente, emboîtés l'un dans l'autre, au moins un tube à ressort de torsion (7) et au moins une barre à ressort de torsion (6), **caractérisé en ce que** le mécanisme de commande (3) est constitué d'une unité de servomoteur (11) éloignée du système à ressort de torsion (2) et fixée à la carrosserie du véhicule et d'un levier de commande (13) réglable en pivotement (11) qui lui est raccordé, le levier de commande (13) est relié au tube à ressort de torsion (7) et un levier de sortie (20) à une barre à ressort de torsion (6) tant directement qu'indirectement via une bielle (17) avec l'élément de guidage de roue (5), et le tube à ressort de torsion (7) du système à ressort de torsion (2) est monté à rotation dans un dispositif d'appui (10) relié solidement à un châssis auxiliaire (9) et, de même, l'unité de servomoteur (11) est supportée dans le châssis auxiliaire (9).

2. Dispositif de réglage d'essieu selon la revendication 1, **caractérisé en ce que** le système à ressort de torsion (2) emboîté l'un dans l'autre contient une barre à ressort de torsion (6) de plein matériau qui s'étend à peu près horizontalement dans le sens travers du véhicule et est reçue en partie à rotation dans un tube à ressort de torsion (7), dans lequel la barre à ressort de torsion (6) est reliée solidaire en rotation sur un côté d'extrémité à l'extrémité affectée du tube à ressort de torsion au moyen d'un raccord (8), en particulier reliée solidaire en rotation au moyen d'un raccord d'enfichage (8), et la barre à ressort de torsion (6) dépasse du tube à ressort de torsion (7) en regard du raccord solidaire en rotation (8) avec une saillie (14) de la barre à ressort de torsion et le levier de commande (13) y est raccordé à cette extrémité (22) du tube à ressort de torsion, dans lequel le levier de sortie (20) est raccordé à la saillie (14) de la barre à ressort de torsion.

3. Dispositif de réglage d'essieu selon l'une quelconque des revendications 1 ou 2, **caractérisé en ce que** le levier de commande (13) et le levier de sortie (16,20) ainsi qu'éventuellement une bielle (17) sont aménagés à pivotement dans un plan de pivotement qui est plus ou moins perpendiculaire à l'axe du système à ressort de torsion (2).

4. Dispositif de réglage d'essieu selon l'une quelconque des revendications 1 à 3, **caractérisé en ce que** l'unité de servomoteur (11) présente une commande linéaire, en particulier une vis d'entraînement à billes entraînée par voie électromotrice avec un système de mesure de course et des freins de retenue, dans lequel, en position de départ, le levier actif du levier de commande (13) et l'axe ou l'élément de commande linéaire (12) de la commande linéaire (11) adoptent de préférence un angle d'environ 90°.

5. Dispositif de réglage d'essieu selon l'une quelconque des revendications 1 à 4, **caractérisé en ce que** le raccordement respectivement terminal transférant la rotation entre la barre à ressort de torsion (6) et le tube à ressort de torsion (7) est réalisé par un raccord d'enfichage (8) avec un engrenage.

6. Dispositif de réglage d'essieu selon l'une quelconque des revendications 1 à 5, **caractérisé en ce que** le dispositif de réglage d'essieu est un dispositif de réglage d'essieu avant (18), dans lequel la barre à ressort de torsion (6) est une partie de branche d'un stabilisateur en forme de L, qui est recourbé dans la zone de la saillie (14) de la barre à ressort de torsion en sa seconde branche de stabilisateur (20) comme levier de sortie et est relié à l'extrémité à l'élément de guidage de roue (5) via une bielle (17) et un levier de commande (13) relié à l'unité de servomoteur (11) est raccordé à l'extrémité affectée (22) du tube à ressort de torsion.

7. Dispositif de réglage d'essieu selon l'une quelconque des revendications 1 à 6, **caractérisé en ce que** le système à ressort de torsion (2) est aménagé respectivement parallèlement à un ressort de suspension en tant que ressort accumulateur du dispositif de réglage d'essieu (1 ; 18).

8. Dispositif de réglage d'essieu selon l'une quelconque des revendications 1 à 7, **caractérisé en ce que** l'élément de guidage de roue (5) est un guide d'essieu, en particulier un guide trapézoïdal, un guide triangulaire ou un guide unique.
